# EUROPÄISCHE PATENTSCHRIFT

(11) **EP 0 778 651 B1**
(45) Veröffentlichungstag und Bekanntmachung des Hinweises auf die Patenterteilung: **08.03.2000**
(21) Anmeldenummer: 96116456.3
(22) Anmeldetag: 15.10.1996
(51) Int. Cl.: H02K 5/22, H02G 3/08, H01R 13/58

(54) **Anordnung zum Anschluss eines Geräte-Anschlusskabels**
Arrangement for connecting the connection cable of an electric appliance
Dispositif de connexion du cable de raccord d'un appareil électrique

(30) Priorität: 05.12.1995 DE 19545326
(43) Veröffentlichungstag der Anmeldung: 11.06.1997
(73) Patentinhaber: ebm Werke GmbH & Co., 74673 Mulfingen (DE)
(72) Erfinder: Streng, Gunter, 74575 Schrozberg (DE)
(74) Vertreter: Patentanwälte Dr. Solf & Zapf

(56) Entgegenhaltungen:
- WO-A-94/09533
- DE-A- 3 426 973
- DE-C- 4 020 180
- FR-A- 2 457 622
- FR-A- 2 535 914
- US-A- 1 607 436
- US-A- 3 518 616
- US-A- 4 108 527
- US-A- 4 128 735
- US-A- 4 523 117

## Beschreibung

Die vorliegende Erfindung betrifft eine Anordnung zum Anschluß eines Anschlußkabels an einem elektrischen Gerät, insbesondere an einem Elektromotor, mit Zugentlastung der Anschlüsse, mit einem mit dem Gerät verbundenen, einen Kabel-Anschlußbereich umkapselnden, in einer Teilungsebene in zwei gleichartige, miteinander verbundene Gehäusehälften geteilten Anschlußgehäuse, wobei die Gehäusehälften gemeinsam eine Kabeldurchführung und einen Geräte-Verbindungsbereich bilden.

Die US-A-1 607 436 offenbart eine derartige Anordnung.

Es ist auch bekannt, ein Anschlußkabel zur Zugentlastung mittels eines schellenartigen Befestigungselementes geräteseitig zu fixieren. Diese Art der Zugentlastung führt aber zu einer recht zeitaufwendigen Montage, da die Schelle in der Regel mit mindestens zwei Schrauben befestigt werden muß. Der Anschlußbereich kann dann bei manchen Geräten noch durch eine Abdeckung umschlossen werden. Die Herstellung und Montage einer solchen Abdeckung führt zu einem zusätzlichen Kosten- und Arbeitsaufwand.

Der vorliegenden Erfindung liegt die Aufgabe zugrunde, den zugentlasteten, gekapselten Anschluß eines Anschlußkabels mit konstruktiv einfachen und kostengünstigen Mitteln montagemäßig wesentlich zu vereinfachen, wobei insbesondere auch die Forderung nach einer höheren Schutzart (IP 54) erfüllt sein soll.

Die Lösung der gestellte Aufgabe gelingt nach der Erfindung dadurch, daß jede Gehäusehälfte eine elastomere Teildichtung derart aufweist, daß im montierten, geschlossenen Zustand des Anschlußgehäuses eine umlaufende Abdichtung sowohl zwischen den beiden Gehäusehälften als auch zwischen dem von diesen gebildeten Anschlußgehäuse und einerseits dem Gerät und andererseits dem Anschlußkabel gewährleistet ist, und wobei im montierten, geschlossenen Zustand des Anschlußgehäuses die Zugentlastung durch Halterung des Anschlußkabels im Bereich der Kabeldurchführung gewährleistet ist.

Das erfindungsgemäße, zweigeteilte Anschlußgehäuse dient somit vorteilhafterweise gleichzeitig zur Zugentlastung und zur abgedichteten Kapselung des Anschlußbereichs. Es ermöglicht eine außerordentlich einfache Montage, indem lediglich die beiden Gehäusehälften unter halterndem Einschluß des Anschlußkabels und eines Geräteansatzes miteinander verbunden, insbesondere miteinander verrastet zu werden brauchen. Durch dieses Zusammenfügen der beiden Gehäusehälften erfolgt vorteilhafterweise auch gleichzeitig die Halterung an dem Gerät, und zwar bevorzugt über eine Formschlußverbindung. Hierzu können die Gehäusehälften mit Halteansätzen formschlüssig in entsprechende Vertiefungen des Geräteansatzes eingreifen. Der Anschlußbereich ist dann bereits vollständig umkapselt und so gegen Schmutz und Nässe effektiv geschützt, so daß eine hohe Schutzart (IP54) erfüllt ist. Ein ganz wesentlicher Vorteil ist hierbei die gleichartige bzw. identische Ausgestaltung der beiden Gehäusehälften, was insgesamt zu einer äußerst kostengünstigen Fertigung führt.

Weitere vorteilhafte Ausgestaltungsmerkmale der Erfindung sind in den Unteransprüchen sowie der folgenden Beschreibung von zwei bevorzugten Ausführungsbeispielen enthalten.

Anhand der Zeichnung soll nun die Erfindung beispielhaft näher erläutert werden. Dabei zeigen:
- Fig. 1: eine Teilansicht eines elektrischen Gerätes, hier eines Elektromotors, mit einem Anschlußbereich für ein angedeutetes Anschlußkabel,
- Fig. 2: eine Seitenansicht in Pfeilrichtung II gemäß Fig.1 ohne Darstellung des Anschlußkabels,
- Fig. 3: eine vergrößerte Schnittdarstellung in der Ebene III-III gemäß Fig. 1,
- Fig. 4: eine Ansicht auf die Innenseite einer der beiden Gehäusehälften des erfindungsgemäßen Anschlußgehäuses in einer ersten Ausführungsform,
- Fig. 5: einen Querschnitt längs der Schnittlinie V-V in Fig. 4,
- Fig. 6: einen Schnitt in der Schnittebene VI-VI gemäß Fig. 4,
- Fig. 7: eine Ansicht auf die Außenseite der in Fig. 4 dargestellten Gehäusehälfte,
- Fig. 8: eine Ansicht einer der Gehäusehälften analog Fig. 4 in einer zweiten Ausführungsform des erfindungsgemäßen Anschlußgehäuses,
- Fig. 9: einen Schnitt in der Schnittebene IX-IX gemäß Fig. 8 und
- Fig. 10 a, b, c: drei Ausführungsvarianten einer bei dem Anschlußgehäuse nach Fig. 8 und 9 vorgesehenen Kabeltülle in einer Ansicht in Pfeilrichtung X gemäß Fig. 8 bzw. 9.

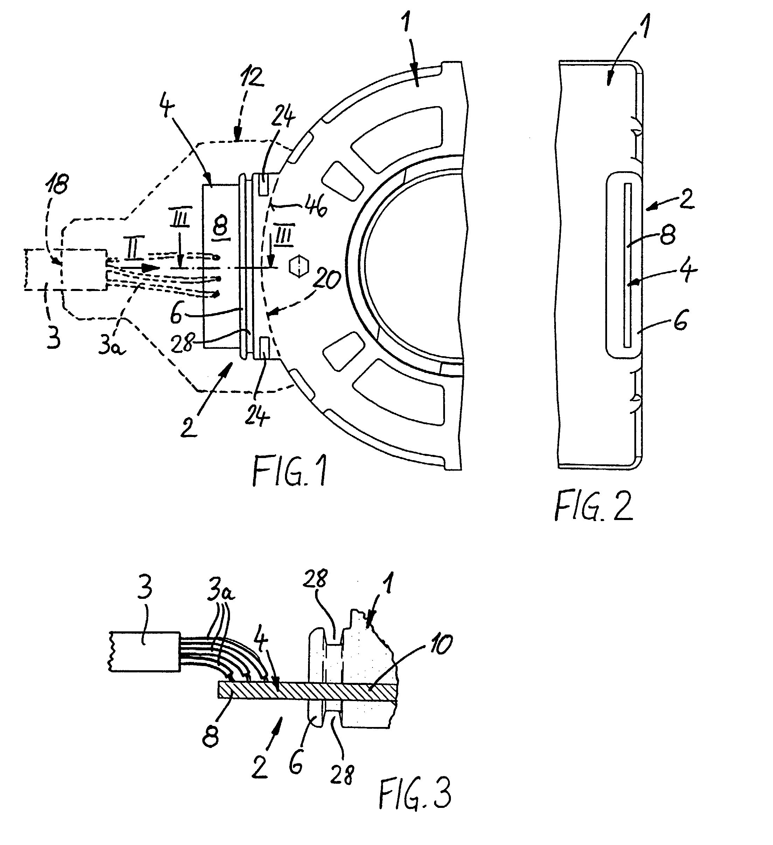

In den Fig. 1 bis 3 ist ein elektrisches Gerät 1 veranschaulicht, welches im bevorzugten Ausführungsbeispiel speziell ein Elektromotor ist. Das Gerät 1 besitzt einen von außen zugänglichen Anschlußbereich 2 für ein Anschlußkabel 3, wobei im Anschlußbereich 2 eine Kabel-Anschlußeinrichtung 4 angeordnet ist, an der die einzelnen Leiter 3a des Anschlußkabels elektrisch angeschlossen werden können. Das Gerät 1 weist ein Gerätegehäuse auf, von dessen Außenfläche (Außenumfang) erfindungsgemäß im Anschlußbereich 2 ein Geräteansatz (bzw. Gehäuseansatz) 6 vorspringt. Die Kabel-Anschlußeinrichtung 4 ist bevorzugt durch einen aus dem Gerät 1 durch den Geräteansatz 6 hindurch nach außen geführten Anschlußabschnitt 8 einer Leiterplatte 10 gebildet (s. hierzu Fig. 3), wobei das Anschlußkabel 3 bzw. dessen einzelne Leiter 3a mit Leiterbahnen bzw. Anschlußelementen der Leiterplatte 10 verbunden (insbesondere verlötet) bzw. verbindbar ist (sind).

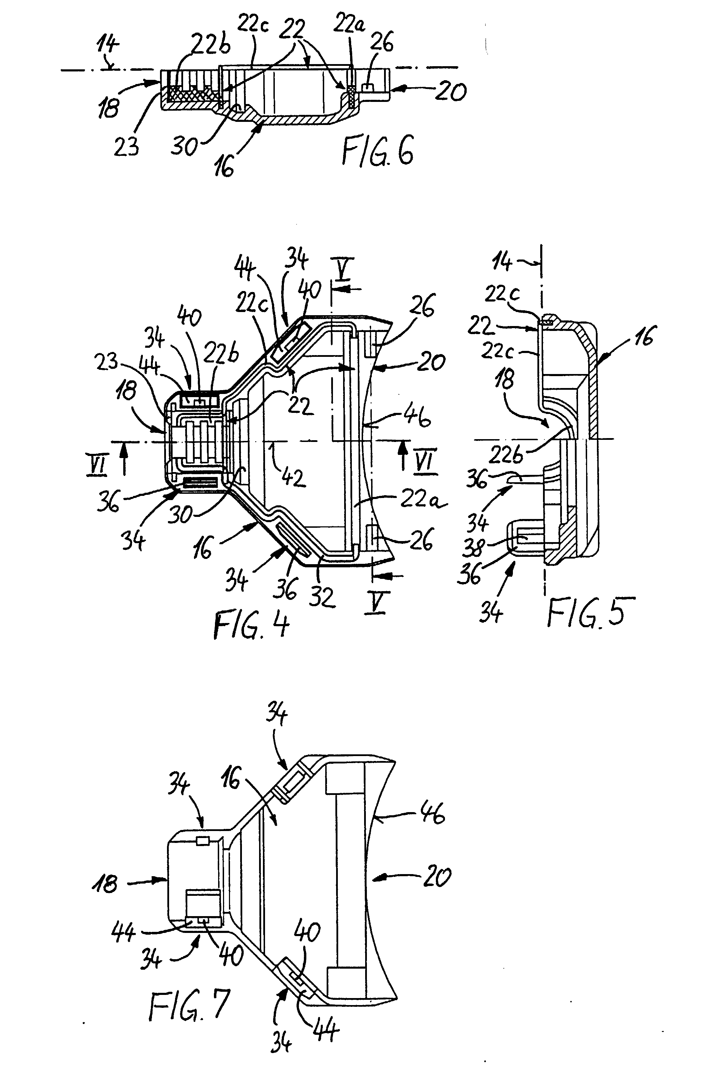

Erfindungsgemäß ist ein mit dem Gerät 1 verbundenes, den Kabel-Anschlußbereich 2 umkapselndes Anschlußgehäuse 12 vorgesehen, welches in Fig. 1 zur Veranschaulichung der montierten Lage gestrichelt eingezeichnet ist. Wie sich aus den Fig. 4 bis 9 ergibt, ist dieses Anschlußgehäuse 12 erfindungsgemäß in einer Teilungsebene 14 (Fig. 5 und 6) in zwei gleichartige, lösbar miteinander verbundene Gehäusehälften 16 geteilt, von denen jedoch in den Fig. 4 bis 9 jeweils nur eine Gehäusehälfte 16 dargestellt ist. Die Gehäusehälften 16 bilden gemeinsam zwischen sich eine Kabeldurchführung 18 sowie einen Geräte-Verbindungsbereich 20 (vgl. auch Fig. 1). Hierbei weist jede Gehäusehälfte 16 erfindungsgemäß eine Teildichtung 22 derart auf, daß im montierten, geschlossenen Zustand eine umlaufende Abdichtung zwischen den beiden Gehäusehälften 16 gewährleistet ist. Zudem ist hierdurch auch eine Abdichtung zwischen dem Anschlußgehäuse 12 bzw. den beiden Gehäusehälften 16 und einerseits dem Gerät 1 im Verbindungsbereich 20 und andererseits dem Anschlußkabel 3 im Bereich der Kabeldurchführung 18 gewährleistet.

Aufgrund einer speziellen Ausbildung und Anordnung der Teildichtungen 22 und aufgrund spezieller Ausgestaltung der beiden Gehäusehälften 16 und von im folgenden noch genauer zu beschreibenden Verbindungsmitteln können vorteilhafterweise beide Gehäusehälften 16 identisch hergestellt werden. Vorzugsweise sind die Gehäusehälften 16 hierbei als Kunststoff-Form bzw. -Spritzteile ausgebildet, und die Teildichtung 22 jeder Gehäusehälfte 16 besteht bevorzugt aus einem elastomeren, angespritzten Material. Die Herstellung erfolgt somit bevorzugt in einem zweistufigen Kunststoffspritzverfahren, was besonders wirtschaftlich ist, zumal ja wegen der Identität der Gehäusehälften 16 nur ein Spritzwerkzeug erforderlich ist.

Zum Verbinden des erfindungsgemäßen Anschlußgehäuses 12 mit dem Gerät 1 werden die Gehäusehälften 16 von zwei gegenüberliegenden Seiten her senkrecht zur Teilungsebene 14 auf den Geräteansatz 6 - diesen teilweise aufnehmend - aufgesetzt und zusammengefügt. Hierbei ist das Anschlußgehäuse 12 bevorzugt über eine Formschlußverbindung an dem Gerät 1 gehaltert, wobei diese Formschlußverbindung vorzugsweise aus formschlüssig in Vertiefungen 24 des Geräteansatzes 6 eingreifenden Halteansätzen 26 der beiden Gehäusehälften 16 besteht. Dies ist natürlich auch umgekehrt möglich, d.h. es können auch entsprechende Ansätze des Geräteansatzes 6 in Vertiefungen der Gehäusehälften 16 eingreifen. Die Richtung dieses Eingreifens entspricht aber jedenfalls der Fügerichtung der beiden Gehäusehälften 16 (i.w. senkrecht zur Teilungsebene 14), so daß das Anschlußgehäuse nach dem Zusammenfügen der Gehäusehälften 16 sicher am Gerät 1 gehaltert ist.

Was nun die Abdichtung betrifft, durch die eine praktisch hermetische Kapselung des Anschlußbereichs 2 erreicht wird, so ist der Geräteansatz 6 in seinem in den Verbindungsbereich 20 des Anschlußgehäuses 12 eingreifenden Bereich jeweils zur Hälfte durch einen entsprechenden Teilabschnitt (in den Fig. 4, 6, 8 und 9 mit dem Bezugszeichen 22a bezeichnet) der beiden Teildichtungen 22 der Gehäusehälften 16 gegen letztere abgedichtet. Dabei ist es vorteilhaft, wenn der Geräteansatz 6 eine umlaufende Dichtnut 28 aufweist (siehe Fig. 1 und 3), in die die Teildichtungen 22 mit den entsprechenden Teilabschnitten 22a eingreifen.

In der Ausführungsform nach Fig. 4 bis 7 bilden die Teildichtungen 22 der Gehäusehälten 16 im Bereich der Kabeldurchführung 18 jeweils die Hälfte einer Kabeldichtung 22b, die vorzugsweise zur Zugentlastung durch kraft- und/oder formschlüssige Halterung des Anschlußkabels 3 auf geeignete Weise profiliert ist. Hierzu besteht die Kabeldichtung 22b insbesondere aus mehreren Ringstegabschnitten, die einen geringeren Innendurchmesser als der Außendurchmesser des Anschlußkabels 3 aufweisen. Hierdurch sowie bei Verwendung eines weichelastischen Materials für die Teildichtungen 22 kann im Bereich der Kabeldurchführung 18 bzw. der Kabeldichtung 22b eine hohe Haltekraft (Kraftschluß) für die gewünschte Zugentlastung erreicht werden. Vorzugsweise schließt sich an die Weich- bzw. Kabeldichtung 22b im nach außen führenden Endbereich der Kabeldurchführung 18 ein relativ härterer, formstabilerer, stegartiger Abschnitt 23 an (siehe Fig. 4 und 6), der bezüglich seines Innenumfanges derart ausgelegt ist, daß ein zu starkes Knicken des Kabels 3 im Dichtbereich vermieden wird.

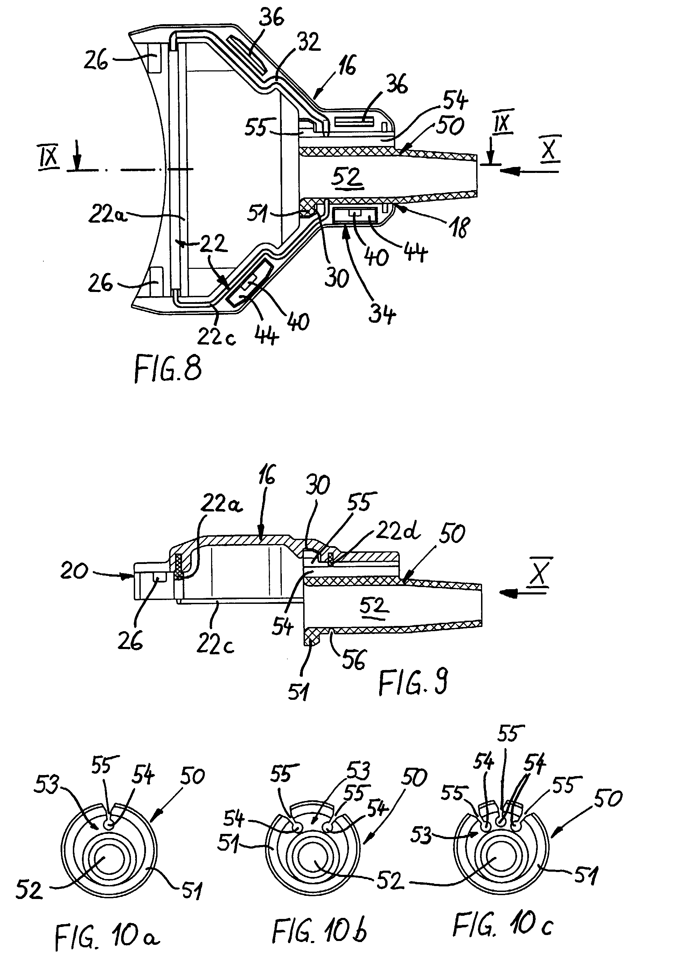

Zusätzlich oder alternativ kann das Anschlußkabel 3 auch mittelbar über eine auf diesem sitzende Kabeltülle 50 gehaltert sein. Diese Ausführungsform ist in den Fig. 8 und 9 veranschaulicht. In diesem Fall weisen die Gehäusehälften 16 im Bereich der Kabeldurchführung 18 rillen- bzw. nutartige Aufnahmevertiefungen 30 zur formschlüssigen Aufnahme eines Ringsteges 51 der Kabeltülle 50 auf (siehe auch Fig. 4 und 6). Anstatt der profilierten, einen hohen Kraftschluß erzeugenden Kabeldichtung 22b reicht in diesem Fall eine einfachere, z.B. "schnurartige" bzw. in jeder Gehäusehälfte 16 halbringförmige Dichtung 22d aus (siehe insbesondere Fig. 9).

Zur direkten gegenseitigen Abdichtung zwischen den beiden Gehäusehälften 16 weist jede Gehäusehälfte 16 in ihrem Verbindungsbereich zur anderen Gehäusehälfte 16 einerseits einen "dichtschnurartigen" Dichtabschnitt 22c der Teildichtung 22 und andererseits symmetrisch hierzu einen dichtungsfreien, vorzugsweise eine Dichtnut 32 aufweisenden Abschnitt derart auf, daß im verbundenen Zustand der beiden Gehäusehälften 16 jeweils der Dichtabschnitt 22c der einen Gehäusehälfte 16 mit dem dichtungsfreien Abschnitt der anderen Gehäusehälfte 16 zusammenwirkt, und zwar insbesondere in die Dichtnut 32 eingreift. Hierzu wird auf Fig. 4 bis 6 sowie Fig. 8 und 9 verwiesen.

Es ist besonders vorteilhaft, wenn die beiden Gehäusehälften 16 des Anschlußgehäuses 12 über Rastverbindungen 34 (schnappbare Form- oder Kraftformschlußverbindungen) lösbar miteinander verbunden sind. Wie sich aus Fig. 4, 5, 7 und 8 ergibt, besteht jede Rastverbindung 34 bevorzugt aus einem federelastischen, bügelartigen Rastarm 36 der einen Gehäusehälfte 16 und einem mit einer Rastöffnung 38 des Rastarms 36 zusammenwirkenden Rastnocken 40 der anderen Gehäusehälfte 16. Vorzugsweise sind beidseitig einer in Fig. 4 eingezeichneten Symmetrielinie 42 jeweils zwei Rastverbindungen 34 vorgesehen, und zwar in einer bezüglich Rastarm 36 und Rastnocken 40 derart umgekehrten, symmetrischen Ausgestaltung, daß beide Gehäuseteile 16 gleich ausgebildet sind. Zwei der somit bevorzugt insgesamt vier Rastverbindungen 34 liegen vorteilhafterweise im Bereich der Kabeldurchführung 18, wodurch eine hohe Halte- und Klemmkraft und damit eine wirkungsvolle Zugentlastung erreicht werden kann.

Es ist zudem vorteilhaft, wenn jedem Rastnocken 40 eine schlitzartige Durchführöffnung 44 für den zugehörigen Rastarm 36 der anderen Gehäusehälfte 16 derart vorgeordnet ist, daß der durchgeführte Rastarm 36 im wesentlichen nur über seine freie, durch die Durchführöffnung 44 geführte Länge elastisch beweglich ist. Hierdurch wird eine wesentliche Erhöhung der Haltekraft durch Reduzierung der elastischen Beweglichkeit der Rastarme 36 erreicht.

Gemäß Fig. 4, 7 und 8 (vgl. auch Fig. 1) ist das Anschlußgehäuse 12 im dargestellten, bevorzugten Ausführungsbeispiel in einer Ansicht senkrecht zur Teilungsebene 14 der beiden Gehäusehälften 16 gesehen im wesentlichen in der Form eines symmetrischen Trapezes ausgebildet. Hierbei ist die Kabeldurchführung 18 im Bereich der kürzeren Trapezparallelen angeordnet, während der Geräte-Verbindungsbereich 20 auf der Seite der längeren Trapezparallelen gebildet ist. Da es sich im dargestellten Ausführungs- bzw. Anwendungsbeispiel bei dem Gerät 1 speziell um einen Elektromotor mit einer im wesentlichen zylindrischen Außenkontur handelt, besitzen die Gehäusehälften 16 des Anschlußgehäuses 12 vorzugsweise auf der Seite des Verbindungsbereichs 20 in Anpassung an die Kontur des Gerätes 1 kreisbogenförmige Endkanten 46. Es wird hierzu insbesondere auf Fig. 1 verwiesen.

Gemäß einer in den Fig. 8 bis 10 (10a bis c) veranschaulichten, vorteilhaften Weiterbildung der Erfindung ist vorgesehen, daß die Kabeltülle 50 eine derart exzentrisch angeordnete Kabel-Durchführöffnung 52 aufweist, daß hierdurch seitlich daneben ein im Querschnitt etwa sichelförmiger Querschnitts-Bereich 53 gebildet ist (siehe Fig. 10a bis 10c), der vorteilhafterweise mit (mindestens) ein bis drei zusätzlichen Leiterdurchführungen 54 versehen ist. Hierdurch ist es auf einfache Weise möglich, zusätzlich zu dem Anschlußkabel 3 weitere (nicht dargestellte) Leiter, beispielsweise einen Schutzleiter und/oder die zwei Anschlußleiter eines Kondensators, durch die Kabeldurchführung 18 zu führen und dabei dennoch die Abdichtung zu gewährleisten. Es ist besonders vorteilhaft, wenn jede Leiterdurchführung 54 über einen Schlitz 55 derart randoffen ausgeführt ist, daß der jeweilige Leiter senkrecht zu seiner Längserstreckung von außen durch den Schlitz 55 in die Leiterdurchführung 54 eingeführt werden kann. Um hierbei die Dichtheit zu gewährleisten, weist die Kabeltülle 50 vorzugsweise gemäß Fig. 9 im hinter dem Ringsteg 51 liegenden Bereich eine umlaufende Ringnut 56 auf, in die die "schnurartige" Dichtung 22d eingreift. Dabei wird die Kabeltülle 50 beim Schließen der Gehäusehälften 16 leicht so zusammengepreßt, daß die Dichtheit auch im Bereich der Leiterdurchführung(en) 54 gegeben ist.

## Patentansprüche

1. Anordnung zum Anschluß eines Anschlußkabels (3) an einem elektrischen Gerät (1), insbesondere an einem Elektromotor, mit Zugentlastung der Anschlüsse, mit einem mit dem Gerät (1) verbundenen, einen Kabel-Anschlußbereich (2) umkapselnden, in einer Teilungsebene (14) in zwei gleichartige, miteinander verbundene Gehäusehälften (16) geteilten Anschlußgehäuse (12), wobei die Gehäusehälften (16) gemeinsam eine Kabeldurchführung (18) und einen Geräte-Verbindungsbereich (20) bilden,
**dadurch gekennzeichnet**, daß jede Gehäusehälfte (16) eine elastomere Teildichtung (22) derart aufweist, daß im montierten, geschlossenen Zustand des Anschlußgehäuses (12) eine umlaufende Abdichtung sowohl zwischen den beiden Gehäusehälften (16) als auch zwischen dem von diesen gebildeten Anschlußgehäuse (12) und einerseits dem Gerät (1) und andererseits dem Anschlußkabel (3) gewährleistet ist, und wobei im montierten, geschlossenen Zustand des Anschlußgehäuses (12) die Zugentlastung durch Halterung des Anschlußkabels (3) im Bereich der Kabeldurchführung (18) gewährleistet ist.

2. Anordnung nach Anspruch 1,
**dadurch gekennzeichnet**, daß die Teildichtung (22) jeder vorzugsweise aus Kunststoff gespritzten Gehäusehälfte (16) aus einem elastomeren, angespritzten Material besteht.

3. Anordnung nach Anspruch 1 oder 2,
**dadurch gekennzeichnet**, daß das Gerät (1) einen vorspringenden Geräteansatz (6) mit einer Kabel-Anschlußeinrichtung (4) aufweist, wobei das Anschlußgehäuse (12) zum Umschließen der Anschlußeinrichtung (4) mit dem Verbindungsbereich (20) auf den Geräteansatz (6) aufgesetzt ist.

4. Anordnung nach Anspruch 3,
**dadurch gekennzeichnet**, daß der Geräteansatz (6) in seinem in den Verbindungsbereich (20) des Anschlußgehäuses (12) eingreifenden Bereich jeweils zur Hälfte durch einen entsprechenden Teilabschnitt (22a) der beiden Teildichtungen (22) der Gehäusehälften (16) gegen letztere abgedichtet ist.

5. Anordnung nach Anspurch 4,
**dadurch gekennzeichnet**, daß der Geräteansatz (6) eine umlaufende Dichtnut (28) aufweist, in die die Teildichtungen (22) eingreifen.

6. Anordnung nach einem oder mehreren der Ansprüche 1 bis 5,
**dadurch gekennzeichnet**, daß das Anschlußgehäuse (12) über eine Formschlußverbindung an dem Gerät (1) gehaltert ist und die Formschlußverbindung bevorzugt aus formschlüssig in Vertiefungen (24) des Gehäuseansatzes (6) eingreifenden Halteansätzen (26) der Gehäusehälften (16) besteht.

7. Anordnung nach einem oder mehreren der Ansprüche 1 bis 6,
**dadurch gekennzeichnet,** daß die Teildichtungen (22) der Gehäusehälften (16) im Bereich der Kabeldurchführung (18) jeweils die Hälfte einer Kabeldichtung (22b) bilden, wobei die Kabeldichtung (22b) vorzugsweise für die Zugentlastung durch kraft- und/oder formschlüssige Halterung des Anschlußkabels profiliert ist.

8. Anordnung nach einem oder mehreren der Ansprüche 1 bis 7, **dadurch gekennzeichnet,**
daß die Gehäusehälften (16) im Bereich der Kabeldurchführung (18) Aufnahmevertiefungen (30) zur formschlüssigen Halterung einer auf dem Anschlußkabel (3) angeordneten Kabeltülle (50) aufweisen.

9. Anordnung nach Anspruch 8,
**dadurch gekennzeichnet,** daß die Kabeltülle (50) zusätzlich zu einer - insbesondere exzentrisch zur Kabeldurchführung (18) des Anschlußgehäuses (12) verlaufenden - Durchführöffnung (52) für das Anschlußkabel (3) mindestens eine Leiterdurchführung (54) aufweist.

10. Anordnung nach Anspruch 9,
**dadurch gekennzeichnet,** daß die bzw. jede Leiterdurchführung (54) über einen Schlitz (55) derart randoffen ausgeführt ist, daß ein Leiter in einer zur Verlaufsrichtung senkrechten Richtung durch den Schlitz (55) in die Leiterdurchführung (54) einführbar ist.

11. Anordnung nach einem oder mehreren der Ansprüche 1 bis 10,
**dadurch gekennzeichnet**, daß jede der beiden Gehäusehälften (16) im Verbindungsbereich zur anderen Gehäusehälfte (16) einerseits einen Dichtabschnitt (22c) der Teildichtung (22) und andererseits symmetrisch hierzu einen dichtungsfreien, vorzugsweise eine Dichtnut (32) aufweisenden Abschnitt derart aufweist, daß im verbundenen Zustand der beiden Gehäusehälften (16) jeweils der Dichtabschnitt (22c) der einen Gehäusehälfte (16) mit dem dichtungsfreien Abschnitt der anderen Gehäusehälfte (16) zusammenwirkt, und zwar insbesondere in die Dichtnut (32) eingreift.

12. Anordnung nach einem oder mehreren der Ansprüche 1 bis 11,
**dadurch gekennzeichnet**, daß die Gehäusehälften (16) des Anschlußgehäuses (12) lösbar und vorzugsweise über Rastverbindungen (34) miteinander verbunden sind.

13. Anordnung nach Anspruch 12,
**dadurch gekennzeichnet**, daß jede Rastverbindung (34) aus einem federelastischen Rastarm (36) der einen Gehäusehälfte (16) und einem mit einer Rastöffnung (38) des Rastarms (36) zusammenwirkenden Rastnocken (40) der anderen Gehäusehälfte (16) besteht.

14. Anordnung nach Anspruch 13,
**dadurch gekennzeichnet**, daß jedem Rastnocken (40) eine schlitzartige Durchführöffnung (44) für den zugehörigen Rastarm (36) derart vorgeordnet ist, daß der durchgeführte Rastarm (36) im wesentlichen nur über seine freie, durch die Durchführöffnung (44) geführte Länge elastisch beweglich ist.

15. Anordnung nach einem oder mehreren der Ansprüche 1 bis 14,
**dadurch gekennzeichnet**, daß das Anschlußgehäuse (12) in einer Ansicht senkrecht zur Teilungsebene (14) der Gehäusehälften (16) gesehen im wesentlichen die Form eines symmetrischen Trapezes aufweist, wobei die Kabeldurchführung (18) im Bereich der kürzeren Trapezseite und der Geräte-Verbindungsbereich (20) auf der Seite der längeren Trapezseite angeordnet sind.

16. Anordnung nach einem oder mehreren der Ansprüche 3 bis 15,
**dadurch gekennzeichnet**, daß die Kabel-Anschlußeinrichtung (4) durch einen aus dem Gerät nach außen geführten Anschlußabschnitt (8) einer Leiterplatte (10) gebildet ist, wobei das Anschlußkabel mit Leiterbahnen bzw. Anschlußelementen der Leiterplatte (10) verbunden bzw. verbindbar ist.

## Claims

1. Arrangement for connection of a connecting cable (3) to an electrical appliance (1), in particular to an electric motor, with strain relief for the connections, having a connecting housing (12) which is connected to the appliance (1), encapsulates a cable terminal area (2) and is split in a dividing plane (14) into two identical housing halves (16) which are connected to one another, in which case the housing halves (16) together form a cable bushing (18) and an appliance connecting region (20), characterized in that each housing half (16) has an elastomer partial seal (22) in such a manner that, when the connecting housing (12) is assembled and closed, a circumferential seal is ensured both between the two housing halves (16) and between the connecting housing (12) formed by them and the appliance (1) on the one hand and the connecting cable (3) on the other hand, and which in case the connecting housing (12) is assembled and closed, the strain relief is ensured by holding the connecting cable (3) in the region of the cable bushing (18).

2. Arrangement according to Claim 1, characterized in that the partial seal (22) of each housing half (16) (which is preferably injection-moulded from plastic) is composed of an elastomer, sprayed-on material.

3. Arrangement according to Claim 1 or 2, characterized in that the appliance (1) has a projecting appliance attachment (6) with a cable connecting device (4), in which case the connecting housing (12) is fitted onto the appliance attachment (6) in order to enclose the connecting device (4) with the connecting region (20).

4. Arrangement according to Claim 3, characterized in that, in its region which engages in the connecting region (20) of the connecting housing (12), half of the seal between the appliance attachment (6) and the housing halves (16) is in each case provided by a corresponding partial section (22a) of the two partial seals (22) of the housing halves (16).

5. Arrangement according to Claim 4, characterized in that the appliance attachment (6) has a circumferential sealing groove (28) in which the partial seals (22) engage.

6. Arrangement according to one or more of Claims 1 to 5, characterized in that the connecting housing (12) is held on the appliance (1) by a positively locked joint, and the positively locked joint preferably comprises holding attachments (26) on the housing halves (16), which engage with a positive lock in depressions (24) in the housing attachment (6).

7. Arrangement according to one or more of Claims 1 to 6, characterized in that the partial seals (22) of the housing halves (16) each form half a cable seal (22b) in the region of the cable bushing (18), in which case the cable seal (22b) is preferably profiled for strain relief by holding the connecting cable with a force fit and/or a positive lock.

8. Arrangement according to one or more of Claims 1 to 7, characterized in that, in the region of cable bushing (18), the housing halves (16) have holding depressions (30) for positively-locked retention of a cable sleeve (50) which is arranged on the connecting cable (3).

9. Arrangement according to Claim 8, characterized in that the cable sleeve (50) has at least one conductor bushing (54) in addition to a bushing opening (52) - which runs in particular eccentrically with respect to the cable bushing (18) of the connecting housing (12) - for the connecting cable (3).

10. Arrangement according to Claim 9, characterized in that the or each conductor bushing (54) is designed to be open at the edge via a slot (55), in such a manner that a conductor can be inserted through the slot (55) into the conductor bushing (54), in a direction at right angles to the cable-run direction.

11. Arrangement according to one or more of Claims 1 to 10, characterized in that, in the connecting region to the other housing half (16), each of the two housing halves (16)on the one hand has a sealing section (22c) of the partial seal (22) and on the other hand has (symmetrically with respect to this) a section which has no seal but preferably has a sealing groove (32), in such a manner that, when the two housing halves (16) are connected, the sealing section (22c) of the one housing half (16) in each case interacts with that section of the other housing half (16) without a seal, to be precise and in particular engaging in the sealing groove (32).

12. Arrangement according to one or more of Claims 1 to 11, characterized in that the housing halves (16) of the connecting housing (12) are connected to one another detachably, and preferably via latching joints (34).

13. Arrangement according to Claim 12, characterized in that each latching joint (34) comprises a resilient latching arm (36) on the one housing half (16) and a latching stud (40) on the other housing half (16), which latching stud (40) interacts with a latching opening (38) in the latching arm (36).

14. Arrangement according to Claim 13, characterized in that a bushing opening (44) like a slot is arranged in front of each latching stud (40), for the associated latching arm (36), in such a manner that the latching arm (36) which is passed through can essentially move elastically only over its free length which is passed through the bushing opening (44).

15. Arrangement according to one or more of Claims 1 to 14, characterized in that, seen in a view at right angles to the dividing plane (14) of the housing halves (16), the connecting housing (12) is essentially shaped like a symmetrical trapezoid, with the cable bushing (18) being arranged in the region of the shorter side of the trapezoid, and the appliance connecting region (20) being arranged on the longer side of the trapezoid.

16. Arrangement according to one or more of Claims 3 to 15, characterized in that the cable connecting device (4) is formed by a connecting section (8) (which is passed out of the appliance to the exterior) of a printed circuit board (10), in which case the connecting cable is connected or can be connected to conductor tracks and/or connecting elements on the printed circuit board (10).

## Revendications

1. Dispositif de connexion d'un câble de raccordement (3) d'un appareil électrique, en particulier d'un moteur électrique, la traction sur le raccord étant atténuée, ledit dispositif comportant un boîtier de connexion (12) relié au dispositif (1) en entourant la région de raccordement (2) du câble, le boîtier étant partagé, dans un plan de séparation (14), en deux demi-boîtiers identiques (16) reliés entre eux, les demi-boîtiers (16) formant ensemble un passage de câble (18) et une région de raccordement (20) du dispositif,
**caractérisé** en ce que chaque demi-boîtier (16) comprend un joint partiel (22) en élastomère, de manière à assurer, à l'état monté et fermé du boîtier de connexion (12), une étanchéité circonférentielle aussi bien entre les deux demi-boîtiers (16) qu'entre le boîtier de connexion (12) formé par ceux-ci et, d'une part, le dispositif (1) et, d'autre part, le câble de raccordement (3), l'atténuation de la traction étant obtenue à l'état monté et fermé grâce à la fixation du câble de raccordement (3) dans la région du passage du câble (18).

2. Dispositif selon la revendication 1,
**caractérisé** en ce que le joint partiel (22) de chaque demi-boîtier (16) obtenu de préférence par injection d'une matière synthétique, est de préférence réalisé en une matière élastomère déposée sur la surface de celui-ci par injection.

3. Dispositif selon la revendication 1 ou 2,
**caractérisé** en ce que le dispositif (1) comprend un prolongement en saillie (6) comportant un moyen de raccordement du câble (4), le boîtier de connexion (12) étant emboîté par sa région de connexion (20) sur le prolongement (6) en vue d'entourer le moyen de raccordement (4).

4. Dispositif selon la revendication 3,
**caractérisé** en ce que, dans sa région s'engageant dans la région de connexion (20) du boîtier de connexion (12), le prolongement (6) du dispositif est respectivement rendu étanche par moitiés par rapport aux demi-boîtiers (16) par une section partielle correspondante (22a) des deux joints partiels (22) de ceux-ci.

5. Dispositif selon la revendication 4,
**caractérisé** en ce que le prolongement (6) comprend une rainure d'étanchéité circonférentielle (28) dans laquelle s'engagent les joints partiels (22).

6. Agencement selon l'une ou plusieurs des revendications 1 à 5,
**caractérisé** en ce que le boîtier de connexion (12) est fixé sur le dispositif (1) par liaison mécanique, et en ce que ladite liaison mécanique est de préférence formée par des prolongements de maintien (26) des demi-boîtiers (16) qui s'engagent par leur forme dans des cavités (24) du prolongement de boîtier (6).

7. Agencement selon l'une ou plusieurs des revendications 1 à 6,
**caractérisé** en ce que les joints partiels (22) des demi-boîtiers (16) forment, dans la région du passage de câble (18) respectivement la moitié d'un joint de câble (22b), ce joint (22b) étant de préférence profilé pour obtenir une atténuation de la traction grâce à un maintien par la force et/ou la forme du câble de raccord.

8. Agencement selon l'une ou plusieurs des revendications 1 à 7,
**caractérisé** en ce que les demi-boîtiers (16) présentent dans la région du passage de câble (18) des cavités d'accueil (30) pour le maintien de par la forme d'un passe-câble (50) disposé sur le câble de raccordement (3).

9. Agencement selon la revendication 8,
**caractérisé** en ce que, en plus d'une ouverture de passage (52) pour le câble de raccordement (3) s'étendant en particulier de manière excentrique par rapport au passage de câble (18) du boîtier de connexion (12), le passe-câble (50) présente au moins un passage de conducteur (54).

10. Agencement selon la revendication 9,
**caractérisé** en ce que le ou chaque passage de conducteur (54) est à bord ouvert grâce à une fente (55), de manière à ce qu'un conducteur puisse être introduit dans le passage (54) à travers la fente (55) dans la direction perpendiculaire à la direction de son étendue.

11. Agencement selon l'une ou plusieurs des revendications 1 à 10,
**caractérisé** en ce que chacun des demi-boîtiers (16) présente dans la région de raccordement à l'autre moitié de boîtier (16) d'une part une section d'étanchéité (22c) du joint partiel (22), et d'autre part, symétriquement par rapport à celle-ci, une section sans joint comportant de préférence une rainure d'étanchéité (32), de manière à ce que, à l'état assemblé des deux demi-boîtiers (16), la section sans joint de l'autre demi-boîtier (16) coopère avec la section sans joint de l'autre demi-boîtier (16) et s'engage en particulier dans la rainure d'étanchéité (32).

12. Agencement selon l'une ou plusieurs des revendications 1 à 11,
**caractérisé** en ce que les demi-boîtiers (16) sont reliés entre eux de manière amovible, de préférence par des liaisons de verrouillage (34).

13. Agencement selon la revendication 12,
**caractérisé** en ce que chaque liaison par verrouillage (34) est formée par un bras d'arrêt élastique (36) de l'un des demi-boîtiers (16), et par une came d'arrêt (40) de l'autre demi-boîtier (16), cette came coopérant avec une ouverture d'arrêt (38) du bras d'arrêt (36).

14. Agencement selon la revendication 13,
**caractérisé** en ce qu'une ouverture de passage (44) en forme de fente pour le bras d'arrêt (36) correspondant est prévue en amont de chaque came d'arrêt (40), de manière à ce que le bras d'arrêt (36) passé ne soit élastiquement mobile que sur sa longueur libre passée par l'ouverture (44).

15. Agencement selon l'une ou plusieurs des revendications 1 à 14,
**caractérisé** en ce que, vu dans la direction perpendiculaire au plan de séparation (14) des demi-boîtiers (16), le boîtier de connexion (12) présente sensiblement la forme d'un trapèze symétrique, le passage de câble (18) étant prévu dans la région du côté court du trapèze, et la région de raccordement du dispositif (20) étant prévue du côté long du trapèze.

16. Agencement selon l'une ou plusieurs des revendications 3 à 15,
**caractérisé** en ce que le moyen de raccordement du câble (4) est formé par une section de raccordement (8), guidée vers l'extérieur du dispositif, d'une carte de circuits imprimés (10) le câble de raccordement étant connecté ou pouvant être connecté à des circuits imprimés ou à des éléments de connexion de la carte de circuits imprimés (10).
